# EUROPEAN PATENT APPLICATION

(11) **EP 4 835 486 A1**
(43) Date of publication of application: **04.11.2026**
(21) Application number: 24912366.2
(22) Date of filing: 11.12.2024
(51) Int. Cl.: G01N 35/10, G01N 35/02

(54) **AUTOMATIC ANALYSIS DEVICE AND LIQUID STIRRING METHOD FOR AUTOMATIC ANALYSIS DEVICE**

(30) Priority: 29.12.2023 JP 2023223765
(71) Applicant: Hitachi High-Tech Corporation, Minato-ku Tokyo 105-6409 (JP)
(72) Inventor: MATSUDA Kyohei, Tokyo 105-6409 (JP); HAMASAKI Koshin, Tokyo 105-6409 (JP)
(74) Representative: MERH-IP Matias Erny Reichl Hoffmann Patentanwälte PartG mbB
(86) International application number: PCT/JP2024/043748
(87) International publication number: WO 2025/142477

(57) **Abstract**

[Problem]

To provide an automatic analyzer and a liquid stirring method for the automatic analyzer, in which it is possible to provide constant stirring efficiency regardless of the amount of liquid discharged from a dispensing probe during discharge stirring.

[Solution]

In an automatic analyzer and a liquid stirring method for the automatic analyzer, the automatic analyzer includes: a probe that aspirates and discharges liquid; a mounting portion on which a container containing liquid is placed; a syringe that delivers liquid to the probe through a flow channel; and a control unit that controls the operation of the probe and the syringe. If the amount of liquid discharged from a leading end of the probe into the container is equal to or greater than a predetermined value, the control unit performs control so that the leading end of the prove is separated from the liquid level of the container at the end of the operation of the syringe. If the amount of liquid discharged from the probe into the container is less than a predetermined value, the control unit performs control so that the leading end is immersed in the liquid in the container at the end of the operation of the syringe.

## Description

### Technical Field

The present invention relates to an automatic analyzer and a liquid stirring method for the automatic analyzer.

### Background Art

In automatic analyzers used in the medical field, there is a need for sufficient stirring of a sample and a reagent. Methods for stirring include a method using a stirring rod, discharge stirring in which stirring is performed using a liquid dispensing mechanism, and the like.

Here, Patent Literature 1 discloses the technology by which, when liquid to be stirred is aspirated into a dispensing probe (pipette), segmented air is introduced into a leading end portion of a pipette tip during aspiration without aspirating the whole amount of liquid, and then the liquid to be stirred is repeatedly aspirated and discharged in order to achieve the improved stirring effect.

### Citation List

### Patent Literature

Patent Literature 1: Japanese Unexamined Patent Application Publication No. 2011-107089

### Summary of Invention

### Technical Problem

The automatic analyzer performs analyses using many types of reagents corresponding to many analysis items. The amount of reagent used per analysis and the amount of sample to be mixed with the reagent are dependent upon analysis items. While studying the improvement in stirring efficiency of discharge stirring, the inventors have found that the stirring efficiency changes according to the amount of liquid discharged from a dispensing probe during discharge stirring (varies according to analysis item), and the inventors have invented a method for providing constant stirring efficiency regardless of the amount of liquid. Patent Literature 1 provides no description of a change of stirring method depending on the amount of liquid discharged. It is an object of the present invention to provide an automatic analyzer and a liquid stirring method for the automatic analyzer, in which it is possible to provide constant stirring efficiency regardless of the amount of liquid discharged from a dispensing probe during discharge stirring.

### Solution to Problem

In order to achieve the above-mentioned object, the present invention is as described below.

An automatic analyzer and a liquid stirring method for the automatic analyzer that includes: a probe that aspirates and discharges liquid; a mounting portion on which a container containing liquid is placed; a syringe that delivers liquid to the probe through a flow channel; and a control unit that controls operation of the probe and the syringe, in which if an amount of liquid discharged from a leading end of the probe into the container is equal to or greater than a predetermined amount, the control unit performs control so that the leading end of the prove is separated from a liquid level of the container at an end of the operation of the syringe, and, if the amount of liquid discharged from the probe into the container is less than the predetermined amount, the control unit performs control so that the leading end of the prove is immersed in the liquid in the container at the end of the operation of the syringe.

In this case, when a high viscosity solution is to be stirred, the leading end is desirably controlled to be immersed in the liquid in the container at the end of the operation of the syringe without regard for the amount of liquid.

### Advantageous Effects of Invention

It is possible to provide an automatic analyzer and a liquid stirring method for the automatic analyzer, in which constant stirring efficiency is provided regardless of the amount of liquid discharged from a dispensing probe during discharge stirring.

### Brief Description of Drawings

FIG. 1 is a schematic view of an automatic analyzer.
FIG. 2 is a schematic view illustrating an example of the configuration of a dispensing unit.
FIG. 3 is a schematic view illustrating the flow of automatic selection of a stirring mode.
FIG. 4 is a schematic view of stirring mode operation A.
FIG. 5 is a schematic view of stirring mode operation B.
FIG. 6 shows the relationship between liquid height and tip height.
FIG. 7 is an explanatory diagram of discharge speed, and the rise of liquid in a reaction vessel.
FIG. 8 is an explanatory diagram of the force relationship between droplets.

### Description of Embodiments

Preferred embodiments of an automatic analyzer in accordance with the present invention will be described below with reference to the accompanying drawings.

It should be noted that, in a following description and accompanying drawings, like reference signs are used to indicate components having similar or same functional configurations and thus a repeated description is omitted. It should be understood that the technical scope of the present invention is not limited to the embodiments.

### First Embodiment

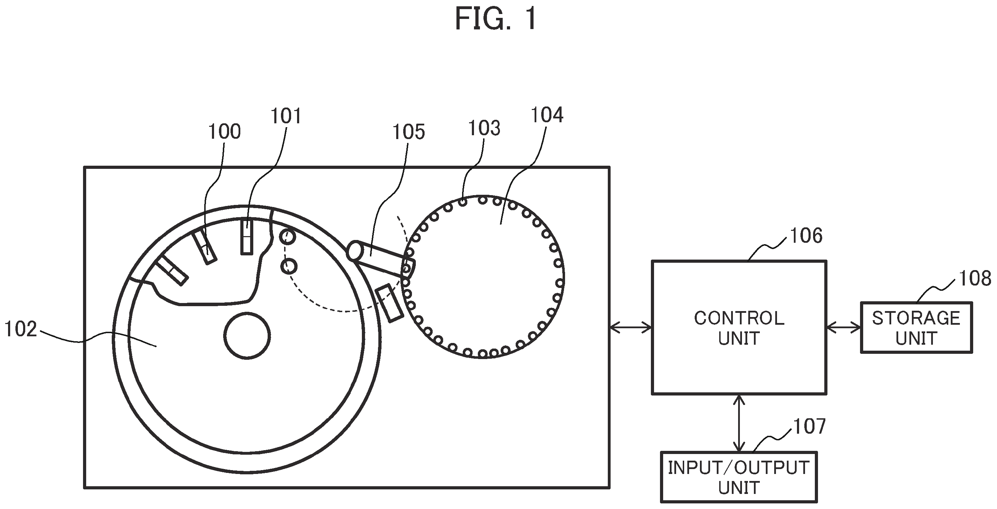

An example of the overall configuration of the automatic analyzer is described with reference to Fig. 1. The automatic analyzer is an apparatus for analyzing a certain component included in a sample such as blood, urine and/or the like provided by a patient, which has a mounting portion 102 on which a container is placed, a dispensing unit 105, a cell disk (incubator) 104, a control unit 106, an input-output unit 107 and a storage unit 108. Each component is described below.

The mounting portion 102 stores a sample container 100 containing a sample and a reagent bottle 101 containing a reagent, and carries the sample container 100 and the reagent bottle 101 to a position which is accessible to the dispensing unit 105.

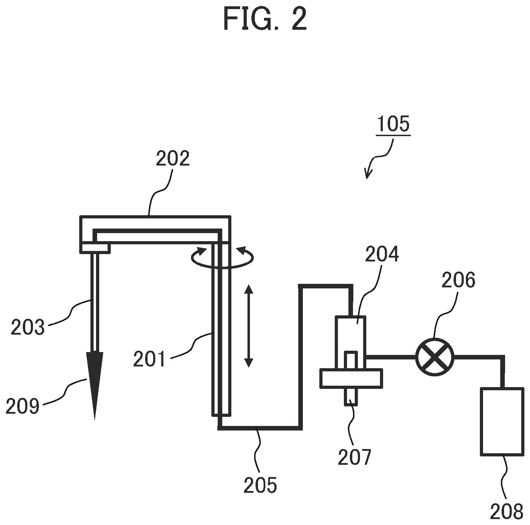

The dispensing unit 105 dispenses and stirs a sample or a reagent from the sample container 100 or the reagent bottle 101 into a reaction vessel 103 stored on the cell disk 104. Detailed parameters of the dispensing and the stirring are controlled by the control unit 106. It is also possible to select automatically operation from the liquid property information on registered solutions. It is noted that a single dispensing unit 105 may be used to dispense a sample and a reagent, alternatively, two, a sample dispensing unit and a reagent dispensing unit, may be installed to dispense individually each of a sample and a reagent. The configuration of the dispensing unit 105 will be described later in more detail with reference to Fig. 2.

The cell disk 104 stores the reaction vessel 103 containing a liquid mixture of a sample and a reagent, within a range of temperatures at which a reaction occurs in the liquid mixture, and the cell disk 104 carries the reaction vessel 103 to a position which is accessible to the dispensing unit 105. The liquid mixture in the reaction vessel 103 results in a reaction solution to be used in measurement because the reaction vessel 103 is stored within the predetermined range of temperatures.

The control unit 106 is a computer for controlling operation of each portion, which is responsible for the operational control in the embodiment.

The input-output unit 107 is apparatus for receiving input of data required for analysis, and for displaying analysis results, which is, for example, a keyboard, a mouse, a touch panel, a liquid crystal display, and/or the like.

The storage unit 108 is apparatus for storing the data required for analysis and the analysis results, which is, for example, an HDD (Hard Disk Drive), an SSD (Solid State Drive), and/or the like.

An example configuration of the dispensing unit 105 is described with reference to Fig. 2. The dispensing unit 105 has a shaft 201, an arm 202, a dispensing probe 203, a syringe pump 204, a tube 205 and a solenoid valve 206.

The shaft 201 is a vertically extending hollow member, which is moved upward and downward. The arm 202 is a horizontally extending hollow member, which has one end connected to an upper end portion of the shaft 201 and the other end attached with the dispensing probe 203 so that the arm 202 is rotated about the shaft 201 as a rotational axis. By the rotation of the arm 202, the dispensing probe 203 is moved to just above the sample container 100 and the reagent bottle 101.

The dispensing probe 203 is a narrow tube inserted into the sample container 100 or the reagent bottle 101 by up-and-down movement of the shaft 201, and the dispensing probe 203 has an upper end connected to the tube 205. The tube 205 extends through the insides of the arm 202 and the shaft 201 to connect the dispensing probe 203 to the syringe pump 204. It is noted that the dispensing probe 203 may be a hollow metallic pipe, and/or may have a leading end attached with a disposable dispensing tip 209.

The syringe pump 204 draws and pushes system water in the dispensing probe 203 by drive of a syringe 207 in order to achieve aspiration and discharge of the sample, the reagent and/or the air from the lower end of the dispensing probe 203. Drawing the system water generates a negative pressure in the dispensing probe to perform aspiration. Pushing the system water generates a positive pressure in the dispensing probe to perform discharge. By the aspiration and discharge, liquid such as a sample, a reagent and/or the like is dispensed.

The solenoid valve 206 is installed between a system water container 208 containing system water and the syringe pump 204, and closed while the sample or the like is dispensed. Upon end of the dispensing, the solenoid valve 206 is opened to supply the system water from the system water container 208, so that the inner wall of the dispensing probe 203 is cleaned with the system water and also the inside of the tube 205 is filled with the system water. In other words, the tube 205 before dispensing is filled with the system water.

As an example operation of the dispensing unit 105 controlled by the control unit 106, the case is described where, after a liquid a, segmented air, and a liquid b are aspirated into the dispensing tip 209, the liquid a, the segmented air and the liquid b are simultaneously discharged into the reaction vessel 103, so that the liquid in the reaction vessel 103 results in a liquid mixture c which is then stirred through re-aspiration and re-discharge operations of the dispensing probe 203. It is noted that the series of operations is referred to as a discharge stirring operation, and the liquid a and the liquid b to be discharged may be the sample or water without being limited to the reagent.

The discharge stirring operation is described below. It is noted that in the embodiment, the case is assumed where a single dispensing probe with a leading end attached with a tip performs the discharge stirring using the same tip as that in multi-shot dispensing simultaneously a plurality of types of liquids.

Ejecting liquid into the reaction vessel 103 is referred to as "discharge". After the liquid a and the liquid b are simultaneously discharged into the reaction vessel 103, in order to mix together the discharged liquids a and b, the tip is used to aspirate simultaneously the liquid a and the liquid b in the reaction vessel 103. This is referred to as "re-aspiration". Then, the re-aspirated liquids a and b are discharged again into the reaction vessel 103. This operation is referred to as "re-discharge".

As a result, the liquid a and the liquid b are mixed together to result in the liquid mixture c. A series of operations to mix together the liquid a and the liquid b to obtain the liquid mixture c is referred to as "discharge stirring".

It is noted that air called segmented air is aspirated to create an air layer between the liquid a and the liquid b during aspiration in order to prevent each solution from being mixed together in the tip. Because of this, the segmented air, together with the liquid a and the liquid b, is also ejected during discharge. The eventually discharged liquid mixture c includes air bubbles. The air bubbles are aspirated again into the tip during re-aspiration, and then ejected simultaneously with the liquid mixture c during re-discharge. The air bubbles in the liquid mixture c form an air-liquid mixed state to increase the stirring effect.

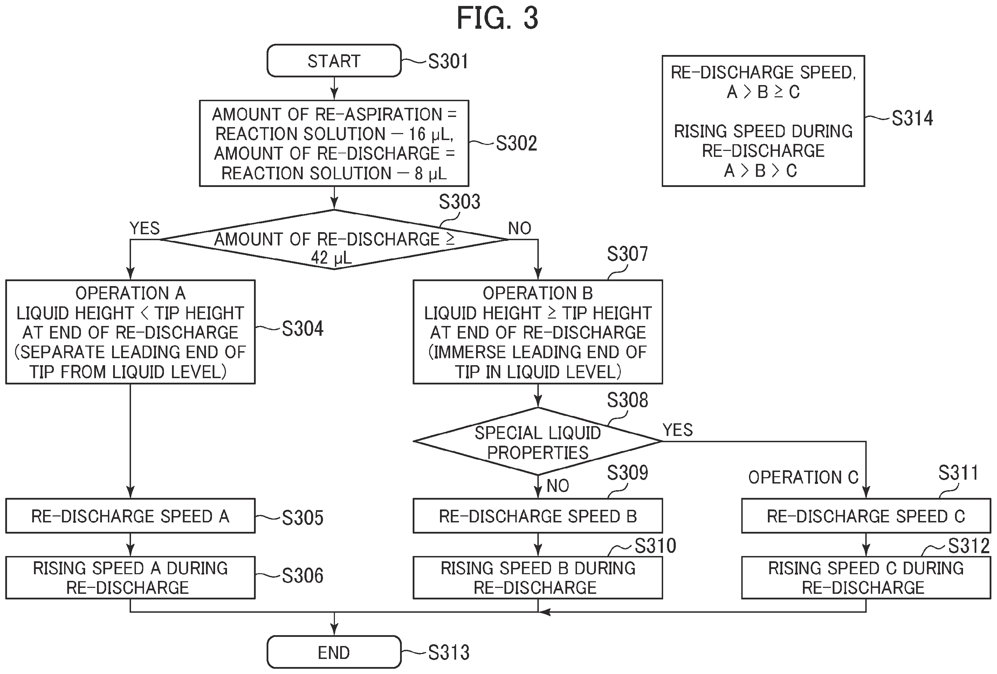

An operation selection flow in the embodiment is described with reference to Fig. 3. In discharge stirring, the stirring operation is automatically selected depending on the total amount of liquid a and liquid b stored in the storage unit 108.

The amounts of liquid a and liquid b are uniquely decided for each measurement item. The amount of re-aspiration and the amount of re-discharge during discharge stirring are defined by the following equations (S302). 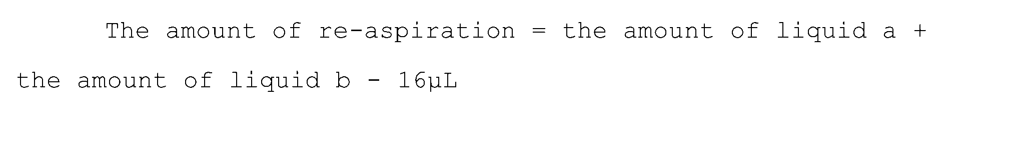 The amount of re-aspiration = the amount of liquid a + the amount of liquid b - 16µL 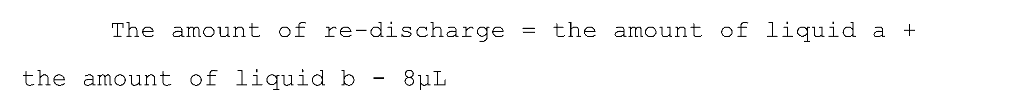 The amount of re-discharge = the amount of liquid a + the amount of liquid b - 8µL

During re-aspiration, an amount which is 16µL less than the sum of the amount of liquid a and the amount of liquid b is aspirated. This is for the purpose of leaving a minimum of 16µL as the amount of liquid finally left in the reaction solution. 16µL is the amount corresponding to the liquid height of about 1.5mm from the vessel bottom in a reaction vessel used in the embodiment. If 1.5mm is not ensured as a clearance between the vessel bottom and the tip leading end at the end of re-aspiration, there is a possibility that the tip leading end is blocked to cause a shortage of re-aspiration. Therefore, this is defined as the amount of liquid a + the amount of liquid b - 16µL. During re-discharge, the amount of discharge is 8µL less than the sum of the amount of liquid a and the amount of liquid b. Stated another way, an amount which is 8µL greater than the amount of re-aspiration is discharged. 8µL is the redundant amount for re-discharging the total amount of re-aspirated liquid into the tip without residual liquid. As a result, a series of discharge stirring process steps for re-aspiration and re-discharge is able to be accomplished without loss of reaction solution.

It is noted that, for the above-described values of 16µL and 8µL, appropriate values are desirably selected based on a shape of a reaction vessel used. Also, in the embodiment, the clearance between the vessel bottom and the tip leading end at the end of re-aspiration is set as 1.5mm. However, in some cases depending on a shape of the leading end of the used tip and/or a shape of the vessel bottom, setting a clearance greater than 1.5mm may be more proper or setting a clearance less than 1.5mm may be more proper. If the appropriate value for the clearance between the tip leading end and the vessel bottom at the end of re-aspiration is changed, the value of 16µL is also changed. 8µL which is the redundant amount for re-discharging the total amount of re-aspirated liquid into the tip without residual liquid can be also changed as appropriate within a range that allows the total amount of re-aspirated liquid to be re-discharged into the tip without residual liquid.

Subsequently, an operation A or an operation B is chosen depending on whether the amount of re-discharge is equal to or greater than or less than a previously set value (predetermined value) (S303). In the embodiment, when the amount of re-discharge is 42µL or greater, the operation A is selected as a stirring operation (S304), while when the amount of re-discharge is less than 42µL, the operation B is selected as a stirring operation (S307). If the conditions of the operation B are satisfied, it is determined whether or not the liquid properties of the liquid mixture c are special (S308). If special, an operation C is selected (S311). Criteria by which to judge whether or not the liquid properties are special are previously registered. Typical examples include "high viscosity" or "strong surface tension", by way example. The determination may be made from the previously registered liquid properties of the liquid a and the liquid b, and/or a user may be selected as occasion demands.

In each of the operation A, the operation B and the operation C, the re-discharge speed is A > B ≥ C and the nozzle rising speed during re-discharge is A > B > C (see S314), the reason for doing so being described later.

In the embodiment, the predetermined amount is set as 42µL. As main reasons thereof, because the reaction vessel has a shape of a combination of a part of a sphere and a cylinder, this causes concern that, if the amount of liquid is less than the predetermined amount, the randomness of liquid flow in a hemisphere is higher to increase the stirring efficiency, while if the amount of liquid is equal to or greater than the predetermined amount, the randomness of liquid flow in an area in the vicinity of the cylindrical shape of the reaction vessel is lower to decrease the stirring efficiency. If the amount of discharge is equal to or greater than the predetermined amount, a decrease in stirring efficiency is able to be inhibited by increasing the discharge speed.

As side benefits, a reduction in throughput of the entire apparatus is able to be inhibited by increasing the re-discharge speed when the amount of discharge is large.

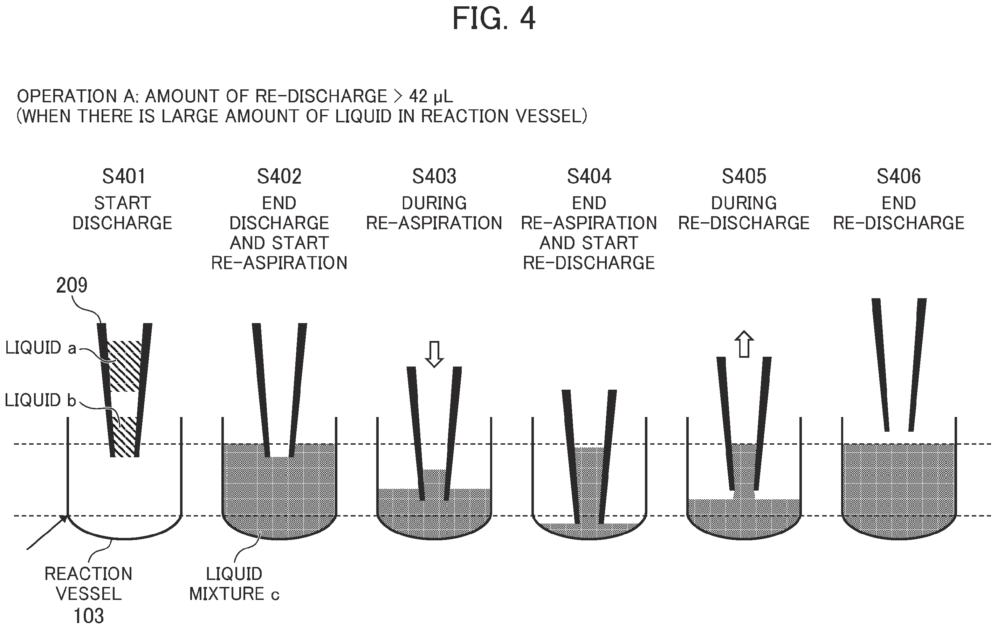

Details of the operation A is described with reference to Fig. 4. After the liquid a and the liquid b are aspirated into the dispensing tip 209, the dispensing probe 203 and the dispensing tip 209 at the probe leading end are moved to an upper portion of the reaction vessel 103 by the rotation of the shaft 201.

In S401, the dispensing probe 203 moves down, and, at the end of discharge, the leading end of the dispensing tip 209 is stopped at a position where it is immersed by 3 mm in the liquid mixture c. In S402, the syringe 207 starts operating, so that the liquid mixture c in the dispensing tip 209 is discharged into the reaction vessel 103. In the meantime, the dispensing probe 203 keeps on stopping in a position of the start of discharge.

During the period from the end of discharge to the start of re-aspiration, the dispensing probe 203 is not moved upward and downward. In S403, the syringe 207 starts being driven to start re-aspiration, whereupon the solution starts being drawn into the dispensing tip 209 and simultaneously the dispensing probe 203 starts moving down. While the immersion depth is gradually decreased from 3mm, the liquid mixture c in the tip is aspirated. The amount of liquid mixture c aspirated into the tip is defined as the liquid a + the liquid b - 16µL as described earlier.

In S404, upon aspiration of only the liquid a + the liquid b - 16 µL into the tip, the operation of the syringe 207 is stopped. At the end of re-aspiration, the leading end of the dispensing tip 209 is controlled to be immersed by about 1mm in the liquid mixture c. By minimizing the immersion range, the contaminated range is decreased to reduce the risk of removal of liquid.

Before stabilizing the pulsation of liquid in the dispensing tip 209 caused by inertia, the syringe 207 is driven in the reverse direction to start re-discharge. As described earlier, the amount of re-discharge is defined as the liquid a + the liquid b - 8µL. By discharging the amount of liquid which is 8µL greater than the amount of re-aspiration, all the liquid in the dispensing tip 209 is able to be discharged.

Simultaneously with the start of re-discharge, a rise of the dispensing probe 203 is started. A re-discharge speed at this time is set at 198µL/s, and a rising speed of the dispensing probe 203 and the dispensing tip 209 is set at 22.5mm/s. At first, re-discharge is started while the dispensing tip 209 is immersed in the liquid. Then, as shown in S405, the tip leading end is controlled to be positioned above the liquid level. The solution is discharged from above the liquid level to allow air bubbles to be involved in the liquid mixture. Even in the case of a large amount of liquid mixture, the strong stirring effect by the air-liquid mixture may be promised.

The re-discharge speed and the rising speed during re-discharge according to the embodiment expect the above-mentioned effect. And also, in order to prevent the interior wall of the reaction vessel and the tip from being contaminated by liquid splashes, the separate distance between the liquid level and the tip is controlled to be 3mm at a maximum. The amount of solution used in analysis is finally decreased by contamination, leading to an unevenly stirred state. Because of this, the liquid splashes are required to be reduced as much as possible.

In S406, the rise of the probe is stopped, and then the operation of the syringe 207 is stopped, so that a rise of the liquid level is stopped. Without relying on the amounts of liquid a and liquid b, the leading end of the dispensing tip 209 has a relationship of being positioned slightly above the liquid level.

Last, the dispensing tip 209 is moved further upward to reach an upper limit point. Then, the arm is rotated by the shaft to end the discharge stirring.

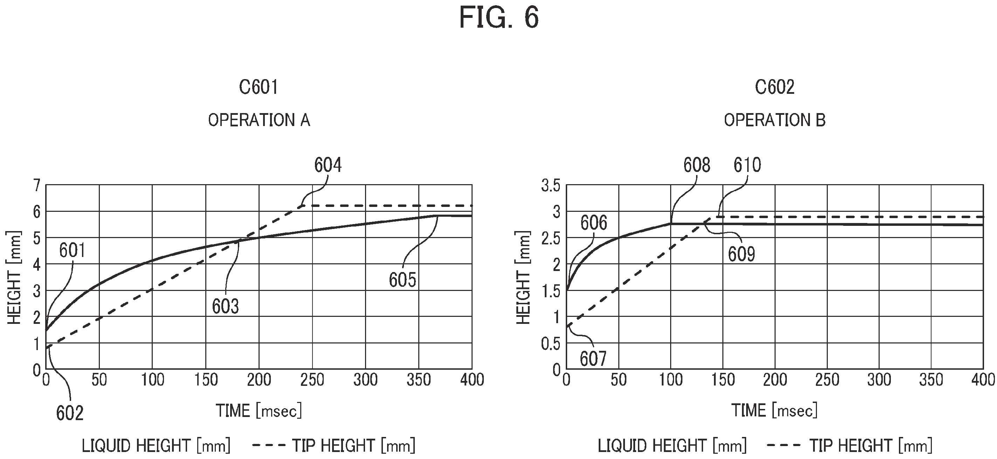

The relationship between the tip height and the liquid height during re-discharge in the operation A is described with reference to C601 in Fig. 6.

Immediately after the start of re-discharge, the dispensing tip 209 is immersed by 1.3mm relative to the liquid level (distance between 601 and 602). After that, the dispensing tip 209 moves up while decreasing the distance from the liquid level, so that the equalization of height is achieved at the time point of 110 milliseconds (603). After 110 milliseconds, the dispensing tip 209 continues to perform re-discharge from a position higher than the liquid level, thereby enabling effective air-liquid mixing even when the amount of liquid is larger. At the time point of 240 milliseconds, the rise during re-discharge is ended, and the dispensing tip 209 waits in a position of the order of 1.5mm higher than the liquid level (604). At the time point of 360 milliseconds, the re-discharge is ended, and the rise of the liquid level stops in a position of 0.2mm lower than the leading end of the dispensing tip 209 (605). It is noted that the liquid height in C601 is presented with consideration given to theoretical values obtained from a shape of a container and a foam height generated by re-discharge and obtained by observation.

It is seen in Fig. 6 that the solution falls in drop at equal speed, but a section between 601 and 603, a change in liquid height over time is nonlinear. This is because a lower portion of the reaction vessel is a hemispherical shape as described earlier.

While liquid is discharged into the reaction vessel of a hemispherical shape, the randomness of liquid flow in the hemisphere is higher to increase the stirring efficiency. On the other hand, it is seen that, in a section between 603 and 605, a change in liquid height over time is linear. This is because liquid drops are discharged into the cylinder-shaped portion of the reaction vessel. The randomness of liquid flow in the cylinder is lower to decrease the stirring efficiency. When the amount of liquid is equal to or greater than that corresponding to the liquid height reaching 603, the discharge speed is preferably increased to improve the stirring efficiency. In the reaction vessel used in the embodiment, the amount of liquid when the liquid height reaches 603 is 42µL. The amount of liquid for switching between discharge speeds relies on shape of the reaction vessel.

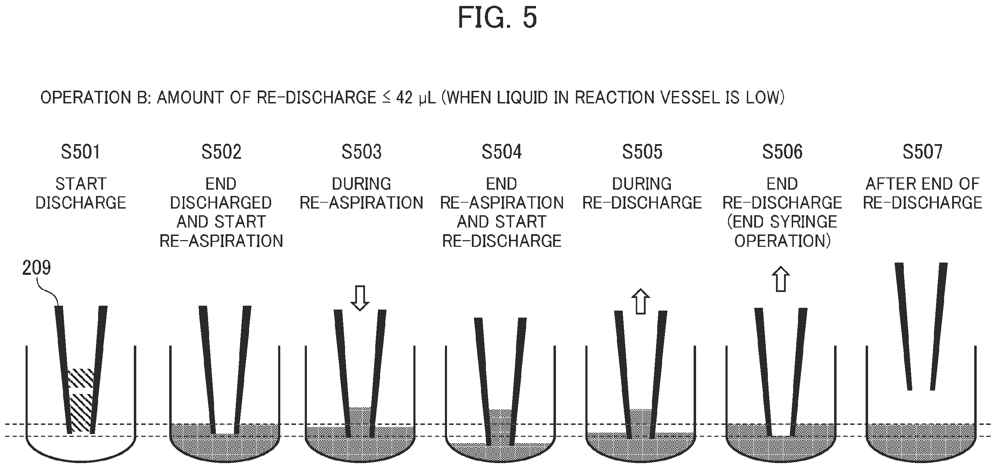

Details of the operation B is described with reference to Fig. 5. After the liquid a and the liquid b are aspirated into the tip, the dispensing probe 203 and the dispensing tip 209 at the probe leading end are moved to an upper portion of the reaction vessel. The dispensing probe 203 is moved down and, after the end of discharge, is stopped in a position where the tip leading end is immersed by 3mm in the liquid mixture. In S501, the syringe 207 starts operating, so that the liquid mixture in the dispensing tip 209 is discharged into the reaction vessel. In the meantime, the dispensing probe 203 keeps on stopping in a position of the start of discharge.

During the period from the end of discharge to the start of re-aspiration, the dispensing probe 203 is not moved upward and downward. After the end of discharge in S502, the syringe 207 starts being driven to start re-aspiration. The solution starts being drawn into the dispensing tip 209 and simultaneously the dispensing tip 209 starts moving down. In S503, while the immersion depth is gradually decreased from 3mm, the liquid mixture in the dispensing tip 209 is aspirated. The amount of liquid mixture c aspirated into the dispensing tip 209 is defined as the liquid a + the liquid b - 16µL as described earlier.

In S504, upon aspiration of the liquid a + the liquid b - 16 µL into the dispensing tip 209, the operation of the syringe 207 is stopped. At the end of the re-aspiration, the leading end of the dispensing tip 209 is immersed by about 1mm in the liquid mixture c. Before stabilizing the pulsation of liquid in the dispensing tip 209 caused by inertia, the syringe 207 is driven in the reverse direction to start re-discharge. As described earlier, the amount of re-discharge is defined as the liquid a + the liquid b - 8µL. By discharging the amount of liquid which is 8µL greater than the amount of re-aspiration, all the liquid in the dispensing tip 209 is able to be discharged.

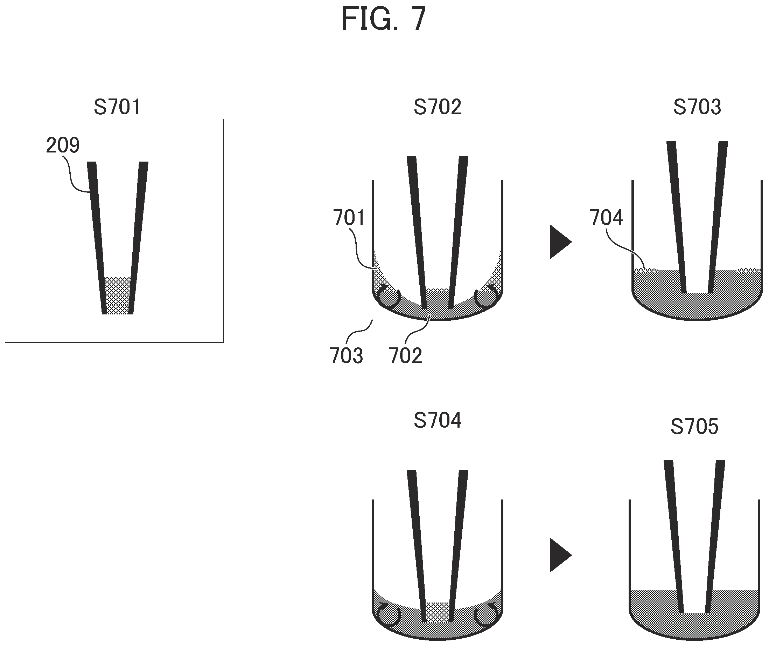

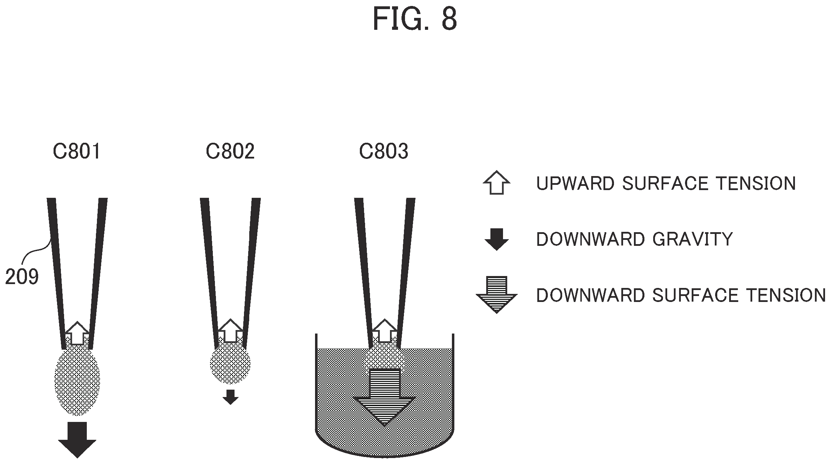

In S505, simultaneously with the start of re-discharge, the dispensing probe 203 starts moving up. A re-discharge speed at this time is set at 139µL/s, and a rising speed of the dispensing probe 203 is set at 15mm/s. The re-discharge speed and the rising speed are controlled to result certainly in operation A > operation B. Two reasons to control both the speeds to be slower than those in the operation A are (1) improvement of the stirring effect and (2) inhibition of removal of the liquid mixture. Details of the reasons are described later with reference to Fig. 7 and Fig. 8. From the above reasons, the operation B is controlled such that while the distance between the leading end of the dispensing tip 209 and the liquid level during re-discharge, the leading end of the dispensing tip 209 is immersed in the liquid mixture at all times.

For the purpose of expecting the above-mentioned effects and preventing spread of contamination of the tip due to liquid wetting, the discharge speed and the rising speed in the embodiment are controlled such that the immersion distance of the tip from the liquid level reaches 2mm at a maximum. The contamination finally brings about a decrease in the amount of solution used in analysis in a random fashion, leading to the risk of unevenly stirring. Because of this, the contamination is required to be reduced as much as possible.

After the end of syringe operation in S506, the re-discharge rise is continued for a while. After the leading end of the dispensing tip 209 is separated from the still liquid level, the dispensing probe 203 moves up such that the leading end of the dispensing tip 209 is located slightly above the liquid level. During the process of separating the leading end of the dispensing tip 209 from the liquid level, the liquid adhering to the tip surface is pulled toward the liquid level, minimizing the residual liquid.

In S507, the dispensing tip 209, together with the dispensing probe 203, is moved further upward to reach an upper limit point. Then, the arm 202 is rotated by the shaft 201 to end the discharge stirring.

The relationship between the tip height and the liquid height during re-discharge in the operation B is described with reference to 602 in Fig. 6C.

Immediately after the start of re-discharge, the dispensing tip 209 is immersed by 1.3mm relative to the liquid level (distance between 606 and 607). After that, the dispensing tip 209 is controlled such that, although it moves up while decreasing the distance from the liquid level, it is in the immersed state at all times in contrast to the operation A. Upon the end of re-discharge at the time point of 100 milliseconds, first of all, the rise of the liquid level stops (608). Then, the tip leading end is separated from the liquid level over about 30 milliseconds (609). The dispensing tip 209 is separated behind the liquid level, so that the liquid adhering to the tip surface is taken by the liquid level, and eventually the amount of removed liquid is reduced. Because of a comparison between a tension of the liquid against the dispensing tip 209 and gravity acting on the amount of solution discharged per unit time, there is no dependence on materials and/or shape of the container bottom. After the separation of the dispensing tip 209 from the liquid level, the dispensing tip 209 is stopped in a position of 0.2mm lower than the liquid level (610). It is noted that the liquid height at C602 is presented with consideration given to theoretical values obtained from a shape of a container and a foam height generated by re-discharge and obtained by observation.

Reference is made to Fig. 7 to describe "(1) improvement of the stirring effect" of the reasons to control the discharge speed and the rising speed in the operation B to be slower than those in the operation A.

In S701, the tip holds a solution therein. In S702, the solution within the tip is discharged into the reaction vessel. The amount of liquid in the operation B is lower than that in the operation A. Because of this, if the discharge speed is too fast, the discharge is ended while the liquid mixture comes into contact with the bottom of the reaction vessel thereby to creep up (701). 702 shows the solution not creeping up, and as shown as 703, the solution is mixed within 702. Although the liquid level is still after the end of discharge, a creeping-up portion of the solution (704) remains on the inner wall of the vessel, and thus has no involvement in formation of a turbulent flow during discharge, resulting in insufficient stirring. Because finally the reaction progresses while an insufficiently stirred solution is being held, the analytical performance deteriorates.

The creeping up 701 is prevented by decreasing the discharge speed to enable formation of a turbulent flow in the entire liquid mixture, leading to effective stirring. However, the discharge speed is required to be a speed which is necessary and sufficient for compatibility between the stirring effect and the prevention of creeping up, with consideration given to the inner diameter of the reaction vessel, the amount of discharge, and typical properties of discharged liquid.

Reference is made to Fig. 8 to describe "(2) inhibition of removal of the liquid mixture" of the reasons to control the discharge speed and the rising speed in the operation B to be slower than those in the operation A.

When the liquid is discharged from the tip, consideration must be given to a risk of a droplet being formed at the tip leading end at the end of discharge and the surface tension causing the discharged liquid to adhere to the tip.

An example of the operation A is shown in C801. Because the re-discharge speed in the operation A is fast, a large droplet 801 is formed at the tip leading end at the end of discharge. Because of larger gravity acting on the large droplet than the surface tension of the tip, the droplet falls.

An example shown in C802 is where the tip leading end is located above the liquid level at the re-discharge speed in the operation B. Because the re-discharge speed in the operation B is slower than that in the operation A, the amount of liquid at the tip leading end is small, so that a small droplet 802 is formed. Because the upward surface tension acting on the tip is stronger than the resultant force of downward gravity and an inertial force acting on the small droplet 802, the droplet remains adhering to the tip.

An example of the operation B is shown in C803. At the end of re-discharge, the tip leading end is immersed in the liquid, so that a droplet is not formed. Therefore, when the driving of the syringe is ended and the tip is moved up, the liquid adhering to the tip surface is pulled both by the downward surface tension acting on the liquid level and the upward surface tension acting on the tip. The strength of the downward tension correlates with the surface area of the reaction vessel with which the liquid mixture is in contact. The area of contact of liquid with the reaction vessel is larger than the surface area of contact of the liquid with the tip. Because of this, the downward surface tension exceeds the upward surface tension, so that all of the liquid is pulled toward the liquid level with the tip moving upward. As a result, to the reaction vessel, all of the liquid mixture is discharged into the reaction vessel, preventing the analytical performance from deteriorating.

Similarly to the operation B, the operation C is controlled such that the tip leading end is immersed in the liquid level at the end of re-discharge. The operation C is directed to a liquid with high viscosity or strong surface tension. Thus, the risk of causing the liquid to adhere to the tip leading end is increased. Because of this, the re-discharge speed C is set to equal to or less than the re-discharge speed B and the rising speed C during re-discharge is set to less than the rising speed B during re-discharge. This is because although the lower the re-discharge speed and the rising speed during re-discharge, the more the discharge accuracy is improved, the re-discharge speed is not able to be less than the re-discharge speed B in terms of the stirring effect.

The liquid height in the embodiment may be obtained from a formula for calculating a liquid height h(V) stored in the storage unit 108. The liquid height h(V) is expressed as h(V) = f(V) + g(V), from a liquid height formula (f(V)) simulated from CAD data on the reaction vessel and a conceivable thickness of bubble layer (g(V)). It is noted that V is the amount of reaction solution. The re-discharge speed and the rising speed during re-discharge are designed based on h(V), thereby enabling precise height control.

### List of Reference Signs

- 100: sample container
- 101: reagent bottle
- 102: mounting portion
- 103: reaction vessel
- 104: cell disk
- 105: dispensing unit
- 106: control unit
- 107: input-output unit
- 108: storage unit
- 201: shaft
- 202: arm
- 203: dispensing probe
- 204: syringe pump
- 205: tube
- 206: solenoid valve
- 207: syringe
- 208: system water container
- 209: tip

## Claims

1. An automatic analyzer comprising:
a probe that aspirates and discharges liquid;
a mounting portion on which a container containing liquid is placed;
a syringe that delivers liquid to the probe through a flow channel; and
a control unit that controls operation of the probe and the syringe, wherein
if an amount of liquid discharged from a leading end of the probe into the container is equal to or greater than a predetermined amount, the control unit performs control so that the leading end of the prove is separated from a liquid level of the container at an end of the operation of the syringe, and, if the amount of liquid discharged from the probe into the container is less than the predetermined amount, the control unit performs control so that the leading end of the prove is immersed in the liquid in the container at the end of the operation of the syringe.

2. The automatic analyzer according to claim 1, wherein
the predetermined amount is determined based on an amount of liquid such that a speed of rise of the liquid level in the container can be linearly approximated.

3. The automatic analyzer according to claim 1, wherein
the predetermined amount is determined based on an amount of liquid that satisfies a height above which an inner diameter of the container becomes constant.

4. The automatic analyzer according to claim 1, wherein
the control unit performs control so that a discharge speed when the amount of liquid discharged from the leading end of the probe into the container is equal to or greater than the predetermined amount is faster than a discharge speed when the amount of liquid discharged from the probe into the container is less than the predetermined amount.

5. The automatic analyzer according to claim 1, wherein
the control unit performs control so that a speed of rise of the probe during discharge when the amount of liquid discharged from the leading end of the probe into the container is equal to or greater than the predetermined amount is faster than a speed of rise of the probe during discharge when the amount of liquid discharged from the probe into the container is less than the predetermined amount.

6. The automatic analyzer according to claim 1, wherein
a tip is attached to the leading end of the probe.

7. The automatic analyzer according to claim 1, wherein
the control unit controls the probe to sequentially aspirate a first liquid from a first container, aspirate air, and aspirate a second liquid from a second container, and then discharge a liquid mixture of the first liquid and the second liquid into a third container.

8. The automatic analyzer according to claim 7, wherein
after the air is discharged into the third container together with the liquid mixture, the control unit performs control to re-aspirate the liquid mixture and the air from the third container and re-discharge the liquid mixture and the air into the third container.

9. The automatic analyzer according to claim 8, wherein
if a viscosity of the liquid mixture during re-discharge is equal to or greater than the predetermined amount, the control unit performs control so that the leading end of the probe is immersed in the liquid in the third container at the end of the operation of the syringe.

10. The automatic analyzer according to claim 9, wherein
the control unit performs control so that the leading end of the probe is immersed in the liquid of the third container during a period from a start of re-discharge to the end of the operation of the syringe.

11. A liquid stirring method for an automatic analyzer including a probe that aspirates and discharges liquid, a mounting portion on which a container containing liquid is placed, and a syringe that delivers liquid to the probe through a flow channel, the liquid stirring method comprising:
separating a leading end of the prove from a liquid level of the container at an end of operation of the syringe if an amount of liquid discharged from the leading end of the probe into the container is equal to or greater than a predetermined amount; and
immersing the leading end of the probe into the liquid in the container at the end of the operation of the syringe if the amount of liquid discharged from the probe into the container is less than the predetermined amount.

12. The liquid stirring method for an automatic analyzer according to claim 11, wherein
the predetermined amount is determined based on an amount of liquid such that a speed of rise of the liquid level in the container can be linearly approximated.

13. The liquid stirring method for an automatic analyzer according to claim 11, further comprising
increasing a discharge speed when the amount of liquid discharged from the leading end of the probe into the container is equal to or greater than the predetermined amount, compared to a discharge speed when the amount of liquid discharged from the probe into the container is less than the predetermined amount.

14. The liquid stirring method for an automatic analyzer according to claim 11, further comprising
increasing a speed of rise of the probe during discharge when the amount of liquid discharged from the leading end of the probe into the container is equal to or greater than the predetermined amount, compared to a speed of rise of the probe during discharge when the amount of liquid discharged from the probe into the container is less than the predetermined amount.

15. The liquid stirring method for an automatic analyzer according to claim 11, wherein
the probe sequentially aspirates a first liquid from a first container, aspirates air, and aspirates a second liquid from a second container, and then discharges a liquid mixture of the first liquid and the second liquid into a third container.
